# EUROPÄISCHE PATENTSCHRIFT

(11) **EP 0 570 662 B1**
(45) Veröffentlichungstag und Bekanntmachung des Hinweises auf die Patenterteilung: **04.09.1996**
(21) Anmeldenummer: 93100769.4
(22) Anmeldetag: 20.01.1993
(51) Int. Cl.: H01H 11/04

(54) **Vormaterial zur Herstellung elektrischer Kontakte, sowie Verfahren und Verwendung des Vormaterials**
Billet for the production of electrical contacts, as well as fabrication and use of the billet
Ebauche pour la production de contacts électriques, ainsi que fabrication et utilisation de l'ébauche

(30) Priorität: 19.05.1992 DE 4216224
(43) Veröffentlichungstag der Anmeldung: 24.11.1993
(73) Patentinhaber: W.C. Heraeus GmbH, D-63450 Hanau (DE)
(72) Erfinder: Wolf, Heinrich, W-6462 Gelnhausen (DE); Feldmer, Dieter, W-6369 Nidderau 5 (DE)
(74) Vertreter: Kühn, Hans-Christian

(56) Entgegenhaltungen:
- EP-A- 0 300 197
- DE-A- 3 107 665
- DE-A- 3 437 981
- FR-A- 2 438 903
- PATENT ABSTRACTS OF JAPAN vol. 13, no. 410 (E-819)(3758) 11. September 1989 & JP-A-01 151 114 (TANAKA) 13. Juni 1989

## Beschreibung

Die Erfindung betrifft ein Verfahren zur Herstellung eines Halbzeuges für elektrische Kontakte, bei dem auf ein Kontaktträgerband ein mit Kontaktprofil versehenes Metallband als Vormaterial mit seiner Bandoberflächenseite so aufgebracht wird, daß auf dieser Bandoberflächenseite befindliche Vorsprünge auf dem Kontaktträgerband aufliegen und anschließend mittels eines Schmelzvorganges durch Widerstandserwärmung eine elektrische und mechanisch feste Verbindung zwischen dem Metallband und dem Kontaktträgerband hergestellt wird,

Aus der EP 0 300 197 A1 ist ein Kontakt zum Hartlöten auf einem Träger durch Widerstandspreßschweißung mittels eines Kurzzeitenergieimpulses bekannt, wobei ein Metallband mit einem Kontaktprofil ausgebildet ist, welches an seiner mit dem Trägerwerkstoff verbindbaren Bandoberflächenseite eine oder mehr Schweißwarzen aufweist, die wenigstens teilweise eine Schicht aus Hartlot - beispielsweise aus den Loten LAg15P5 oder LAg72 - aufweisen, wobei die jeweilige Schweißwarze eine solchermaßen gebildete Hartlotwarze unterstützt. Als Kontaktmaterial sind Silber, als Metallbandwerkstoff ist eine Legierung wie z.B. CuNi30Fe angegeben.

Aus der DE-PS 28 44 888 ist ein Vormaterial zur Herstellung elektrischer Kontakte durch Verbinden mit einem elektrisch leitfähigen metallischen Kontaktträger mittels Widerstandserwärmung bekannt, wobei das als Metallband ausgebildete Vormaterial an seiner mit dem Kontaktträger verbindbaren Bandoberflächenseite so ausgebildet ist, daß im Abstand zueinander und in Längsrichtung des Metallbandes verlaufende Wälle als Vorsprünge ausgebildet sind, zwischen denen sich nut- bzw. rillenförmige Talquerschnitte befinden, die Lotmaterial enthalten; mittels dieses Lotmaterials wird durch Widerstandserwärmung eine elektrisch leitende und mechanisch feste Verbindung zwischen dem als Kontaktprofilstrang dienenden Metallband und dem als Kontaktträger ausgebildeten Band eine feste Verbindung hergestellt.

Weiterhin ist aus der DE-OS 31 07 665 ein Metallhalbzeug mit bandförmigem Träger und einer Metallauflage bekannt, wobei der Träger auf der der Auflage zugekehrten Seite Erhebungen und Vertiefungen aufweist, die mit einer als Lotschicht ausgebildeten Zwischenschicht abgedeckt sind. Die Auflage wird mit dem Träger durch Widerstandsschweißen oder Löten mittels dieser Zwischenschicht verbunden.

Weiterhin ist aus der DE-PS 34 37 981 ein Verfahren zum Herstellen eines Halbzeugs für elektrische Kontakte bekannt, das aus einem metallischen Kontaktträgerband und einem durch Auflegen und anschließendes Widerstandsschweißen aufgebrachten Profilstrang als Kontaktwerkstoff besteht; der bzw. die als Kontaktwerkstoff dienenden Profilstränge weisen an ihrer dem Trägerband zugewandten Seite eine oder mehrere Rillen auf, in die vor dem Widerstandsschweißvorgang sogenannte Lotmetallstränge gesondert eingeführt werden und anschließend für einen festen Verbund zwischen dem Kontaktträgerband und dem Profilstrang aus dem Kontaktwerkstoff sorgen.

Im Zuge der Miniaturisierung von Bauelementen - beispielsweise auch Kontaktelementenwerden zunehmend Werkstoffe höherer elektrischer Leitfähigkeit eingesetzt, welche einerseits im Betrieb nur noch eine geringe Verlustwärme erzeugen, andererseits jedoch sich aufgrund ihrer hohen Wärmeleitfähigkeit nur sehr schlecht verschweißen bzw. verlöten lassen. Auf diese Problematik wird auch bereits in der GB-PS 11 11 478 verwiesen. Weiterhin ist es äußerst problematisch die äußeren Elektroden für die Widerstandserwärmung ohne Beschädigung der Kontakthalbzeuge insbesondere der auf dem Kontaktprofil befindlichen Kontaktierungsschicht aus Edelmetall aufzubringen, da auch in diesen Übergangsbereichen eine erhöhte Wärmeentwicklung auftritt, welche zur Zerstörung der Oberflächen des Halbzeugs führen kann. Es erweist sich daher mit zunehmend größerer Leitfähigkeit der Werkstoffe für den Kontaktträger und den Kontaktprofilstrang aufgrund der ungünstigen Verbindungs- bzw. Verschweißungsmöglichkeiten als schwierig, eine zuverlässige elektrische und mechanisch feste Verbindung herzustellen.

Weiterhin ist die getrennte Zuführung von Lötmaterial, wie sie aus der DE-OS 34 37 981 bekannt ist, beim Aufbringen von einzelnen Kontaktstücken, beispielsweise Einzelkontakten für Relais, in der Praxis mit erheblichen Schwierigkeiten verbunden.

Die Erfindung stellt sich die Aufgabe, ein Verfahren zur Herstellung eines Halbzeuges für elektrische Kontakte durch Verbindung eines mit Kontaktprofil versehenen Metallbandes mit einem im wesentlichen aus Kupfer bestehenden Kontaktträger mittels Widerstandserwärmung anzugeben, bei dem der Werkstoff des Kontaktträgers auch eine höhere elektrische Leitfähigkeit von mehr als 15 m/(Ohm x mm²) bzw. mehr als (15 S x 10⁶)/m aufweisen kann, wobei auch Leitfähigkeitswerte bis zu (57 S x 10⁶)/m angewendet werden können, wie sie bei reinem Kupfer vorliegen. Dabei soll das Metallband als Kontaktprofilstrang so ausgebildet sein, daß an den für die spätere Verbindung vorgesehenen Stellen sehr hohe Stromdichten und damit eine hohe Joule'sche Elektrowärmeleistung erzielt werden kann, um eine sichere, spritzerfreie Schmelzverbindung zu gewährleisten.

Weiterhin soll das als Kontaktprofilstrang ausgebildete Metallband mit Hilfe von Vorsprüngen, in denen eine hohe Joule'sche Wärmeverlustleistung erzielt wird, auf einen Kontaktträger durch Schmelzverbindung aufgebracht werden, wobei während des Schmelzvorganges keinerlei nachteilige Auswirkungen auf die Kontaktoberfläche des Metallbandes bzw. die Rückseite des Trägerbandes erzielt wird; weiterhin soll die Standzeit der von außen zugeführten Elektroden erhöht werden.

Die Aufgabe wird erfindungsgemäß durch die Merkmale des Anspruchs 1 gelöst.

Vorteilhafte Ausgestaltungen des Verfahrens sind in den Ansprüchen 2 bis 4 angegeben. Ein wesentlicher Vorteil der Erfindung ist darin zu sehen, daß die Beschichtung mit der im wesentlichen Silber enthaltenden Schicht bzw. die Silberschicht auf verhältnismäßig einfache Weise, z.B. durch Walzplattieren aufgebracht werden kann, wobei dieser Walzplattiervorgang gleichzeitig mit dem Walzplattiervorgang für die Kontaktfläche des Metallbandes durchgeführt werden kann. Aufgrund der sich verjüngenden Vorsprünge des Metallbandes im Verbindungsbereich zum Kontaktträgerband läßt sich eine nur im Verbindungsbereich auftretende nahezu punktförmige Erwärmung erzielen, wobei aufgrund der sich daran anschließenden Legierungsbildung eine innige Verbindung zwischen Metallband und Kontaktträger erzielen läßt.

In einer bevorzugten Ausführungsform des Vormaterials besteht die Beschichtung aus Silber und ist durch Walzplattieren insbesondere im Bereich von wallartig hervorragenden Vorsprünge aufgebracht, während im Bereich der dazwischen liegenden talförmigen Nuten bzw. Rillen überhaupt keine Beschichtung oder nur eine sehr geringe Beschichtung vorgesehen ist. Bei der Durchführung des erfindungsgemäßen Verfahrens wird das durch Erwärmung und Druck in die Rillen bzw. Täler abgedrängte Beschichtungsmaterial auf Silberbasis mit dem auf Kupferbasis aufgebauten Werkstoff des Kontaktträgers in eine Legierung umgewandelt, deren Schmelzpunkt sowohl unterhalb der des Kupfers als auch der des Silbers liegt. Auf diese Weise läßt sich vorteilhafterweise während der Widerstandserwärmung eine stabile Konfiguration von Kontaktträger und Metallband aufrechterhalten, während Schmelzvorgang und Legierungsbildung sich im eigentlichen Verbindungsbereich zwischen dem Kontaktprofilstrang als Metallband und dem Kontaktträgerband ausbilden. Aufgrund der hohen Stromdichte im Verbindungsbereich mit hohem thermischen Wirkungsgrad lassen sich vorteilhafterweise ungünstige thermische Belastungen im gesamten Schweißstromkreis vermeiden, wobei die Dauer des Schweißstromimpulses in der Praxis deutlich unterhalb von 10 ms liegt.

Im Folgenden ist der Gegenstand der Erfindung anhand der Figuren 1a, 1b, 1c, 2, 3, 4, 5 und 6 näher erläutert.

Figur 1a zeigt im Längsschnitt entlang der Bandlaufrichtung die Herstellung des Vormaterials durch Beschichtung,
Figur 1b zeigt schematisch im Längsschnitt einen Ausschnitt des Vormaterials mit der aufgebrachten Beschichtung und der Kontaktschicht,
Figur 1c zeigt einen Querschnitt des Vormaterials, bei dem ebenfalls Beschichtung und Kontaktschicht erkennbar sind,
Figur 2 zeigt im Querschnitt das in der Elektrodenvorrichtung eingesetzte Vormaterial, wobei ebenfalls der Kontaktträger im Querschnitt erkennbar ist;
Figur 3 zeigt im Querschnitt Kontaktprofilstrang und Kontaktträgerband nach dem Schweißvorgang,
Figur 4 zeigt im Querschnitt einen Kontaktprofilstrang mit einer Vielzahl von Vorsprüngen.
Figur 5 zeigt den Kontaktprofilstrang gemäß Figur 4 vor dem Schweißvorgang.
Figur 6 zeigt den in Figur 4 erläuterten Kontaktprofilstrang nach seiner Verbindung mit dem Kontaktträger.

Gemäß Figur 1a wird der bandförmige Rohling 1 entlang der Längsrichtung 6 einer aus den Walzen 4, 5 bestehenden, schematisch dargestellten Walzvorrichtung 7 zugeführt, wobei oberhalb des Rohlings 1 das Kontaktband 2 zugeführt wird, während unterhalb des Rohlings 1 das Beschichtungsband 3 läuft. In nachfolgenden, hier nicht dargestellten Walzvorgängen und Zwischenglühungen wird das Metallband in seine Form mit dem endgültigen Profil gebracht. Die Walzenprofile der nachfolgenden Walzvorgänge sind dabei so ausgebildet, daß das Metallband an seiner Oberseite beispielsweise ein nahezu dachförmiges Profil erhält, während seine Unterseite mit einer vorgegebenen Anzahl von Vorsprüngen versehen wird. Die Anzahl der Vorsprünge richtet sich dabei zweckmäßigerweise nach der Breite des Metallbandes und der gewünschten Festigkeit der Verbindungsstelle zwischen Kontaktträger und Metallband.

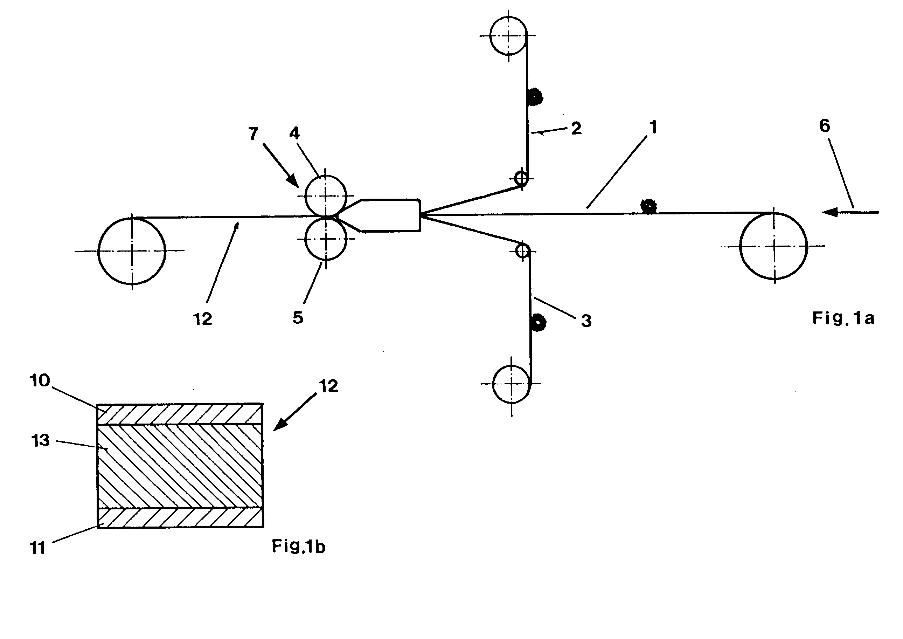

Gemäß Figur 1b ist der aus dem Kontaktband 2 entstandene Kontaktbereich für den späteren Arbeitskontakt mit Bezugsziffer 10 bezeichnet, während der auf den Vorsprüngen 9 entstandene Beschichtungsbereich mit Bezugsziffer 11 bezeichnet ist. Der aus dem Rohling entstandene Kernbereich des als Metallband 12 ausgebildeten Kontaktprofilstranges ist mit Bezugsziffer 13 bezeichnet.

Anhand des in Figur 1c dargestellten Querschnitts ist der Aufbruch des Metallbandes 12 besser erkennbar. An der oberen Seite des dreieckförmigen Profils ist der Kontaktbereich 10 beispielsweise auf der Basis einer Goldlegierung oder Silber-Palladium-Legierung zu erkennen, während der auf der Basis von Silber oder einer Silberlegierung bestehende Beschichtungsbereich 11 auf den Vorsprüngen 9 aufplattiert ist.

Anhand der Figur 1c ist gut erkennbar, daß sich der Beschichtungsbereich im wesentlichen auf die Spitzen der Vorsprünge 9 konzentriert, während die dazwischenliegenden Rillen- bzw. Nutbereiche 8 nur eine sehr schwache Beschichtung bzw. gar keine Beschichtung mehr aufweisen.

Als Werkstoffe werden für den Rohling vorwiegend Nickel eingesetzt, während der Kontaktbereich 10 aus einer Gold-Silber-Legierung, beispielsweise AuAg 10 besteht, während der die Vorsprünge 9 abdeckende Beschichtungs-Bereich 11 im wesentlichen aus Silber, d.h. aus reinem Silber besteht.

Das Kontaktträger-Band besteht aus Kupfer, es ist jedoch auch möglich, eine Kupfer-Legierung mit hohem Kupferanteil für das Kontaktträger-Band vorzusehen.

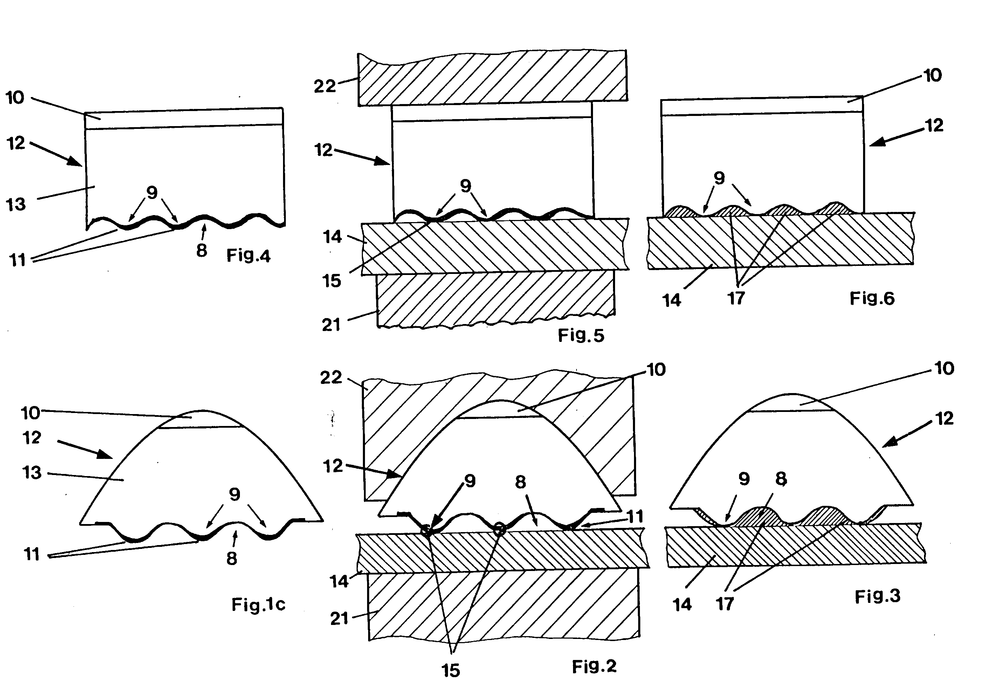

Figur 2 zeigt das auf Kontaktträger 14 aufgesetzte Metallband 12, wobei die auf den Vorsprüngen 9 befindliche Beschichtung 11 direkt auf dem Kontaktträgerband aufliegt und die Rückseite des Kontaktträgerbandes 14 sowie die mit dem Kontaktbereich 10 versehene Oberseite des Metallbandes 12 jeweils von einer Elektrode 21, 22 des hier nicht näher dargestellten Schweißstromkreises umfaßt sind. Anhand dieser Figur ist erkennbar, daß sich die Stromdichte vom Metallband 12 ausgehend im Bereich der Vorsprünge 9 in Richtung zum Kontaktträger 14 zunehmend erhöht, womit auch eine zunehmend höhere Wärmeleistung erzielt wird, so daß die Beschichtung 11 in der Anfangsphase des Schweißstromimpulses zum Schmelzen gebracht wird, worauf das Material der Beschichtung dann aufgrund der Preßwirkung der Elektroden 21, 22 in die Bereiche der Rillen 8 abgedrängt wird, wo es mit dem Kupfer des Kontaktträgers eine Legierung bildet.

Figur 3 zeigt im Querschnitt einen Kontaktprofilstrang, nachdem er die in Figur 2 dargestellte Elektrodenvorrichtung verlassen hat und mit dem darunter liegenden Kontaktträgerband verbunden ist. Anhand der Figur 3 ist auf einfache Weise erkennbar, daß die ursprünglich auf den Spitzen der Vorsprünge 9 befindliche Beschichtung 11 sich von den Vorsprüngen 9 entfernt hat und in den Zwischenräumen bzw. Rillen 8 zusammen mit dem vom Kontaktträger-Band 14 zugeführten Kupfer einen durch einen Schmelzvorgang mittels Widerstandserwärmung gebildeten Verbindungsbereich zwischen Kontaktträger-Band 14 und Metallband 12 bildet; während des Schweißvorganges wird durch Einwirkung des elektrischen Stromes die mit Ziffer 15 bezeichnete Berührungs-Verbindungsstelle gemäß Figur 2 so hoch erwärmt, bis sich das Silber aus dem Beschichtungsbereich 11 und das Kupfer aus dem Kontaktträgerband 14 miteinander legieren und somit eine neue Legierung 17 entsteht, die dem Eutektikum für eine Legierung mit 28 Gew-% Kupfer, Rest-Silber (AgCu 28) mit einem Schmelzpunkt bei 779°C entspricht bzw. sehr nahe liegt.

Figur 4 zeigt einen nach einem ähnlichen Verfahren als Vormaterial hergestellten Kontaktprofilstrang 12 mit einer Vielzahl von Vorsprüngen, welcher an seinen Vorsprüngen 9 ebenfalls mit einer Beschichtung 11 versehen ist.

Figur 5 stellt entsprechend der Figur 2 das auf Kontaktträger 14 aufgesetzte Metallband 12 nach Figur 4 vor dem Schweißvorgang dar; die beiden Elektroden 21, 22 bilden dabei, wie bereits anhand Figur 2 erläutert, einen Teil des Schweißstromkreises.

Nach dem Schweißvorgang entstehen nach Figur 6 entsprechend der Figur 3 zwischen den Vorsprüngen Legierungs-Bereiche 17, die aus einer Silber-Kupfer-Legierung mit den Anteilen von ca. 72 Gew-% Silber und ca. 28 Gew-% Kupfer bestehen und eine elektrisch leitende und feste mechanische Verbindung zwischen dem Metallband 12 und dem Kontaktträgerband 14 herstellen.

## Patentansprüche

1. Verfahren zur Herstellung eines Halbzeuges für elektrische Kontakte, bei dem auf ein Kontaktträgerband (14) ein mit Kontaktprofil versehenes Metallband (12) als Vormaterial mit seiner Bandoberflächenseite so aufgebracht wird, daß auf dieser Bandoberflächenseite befindliche Vorsprünge (9) auf dem Kontaktträgerband (14) aufliegen und anschließend mittels eines Schmelzvorganges durch Widerstandserwärmung eine elektrische und mechanisch feste Verbindung zwischen dem Metallband (12) und dem Kontaktträgerband (14) hergestellt wird, wobei in einem ersten Verfahrensschritt die Vorsprünge (9) des Metallbandes (12) mit einer Beschichtung (11) aus einem im wesentlichen aus Silber bestehenden Werkstoff versehen werden, und in einem zweiten Verfahrensschritt das Metallband (12) auf das Kontaktträgerband (14) aufgebracht, die Beschichtung (11) mittels Widerstandserwärmung unter Beibehaltung der Vorsprünge (9) geschmolzen wird und die Beschichtung (11) durch einen zwischen Metallband und Kontaktträgerband ausgeübten Druck von den Vorsprüngen (9) in die den Vorsprüngen benachbarten Nuten bzw. Rillen (8) abläuft und dort mit dem in diesen Nuten bzw. Rillen (8) eindringenden Werkstoff des Kontaktträgerbandes (14) eine Legierung bildet, dadurch gekennzeichnet, daß das Metallband im wesentlichen aus Nickel und das kontaktträgerband (14) im wesentlichen aus kupfer besteht, und dadurch daß während der Widerstandserwärmung der Anpreßdruck und/oder die Stromdichte derart gesteuert oder eingestellt werden, daß der Werkstoff des Kontaktträgerbandes (14), in die Nuten, bzw. Rillen (8) eindringen kann, und somit die Vorsprünge (9) des Metallbandes (12) durch Schmelzen des Kontaktträgerbandes wenigstens teilweise in den Kontaktträger eindringen und dadurch eine derartige Menge des Kontaktträgerwerkstoffes in den Nuten bzw. Rillen (8) eindringt, so daß diese Menge in einem vorbestimmten Verhältnis zu der Menge des ebenfalls in diesen Nuten bzw. Rillen (8) abgelaufenen Beschichtungsmaterials steht, wobei das Verhältnis von Kontaktträgerwerkstoff zu Beschichtungsmaterial derart gewählt ist, daß die sich zwischen den Nuten bzw. Rillen (8) bildende Legierung einen Schmelzpunkt unterhalb der Schmelzpunkte der Werkstoffe des Kontaktträgerbandes (14) und des Metallbandes (12) hat und eine elektrisch leitende und mechanisch feste Verbindung sowohl mit dem Werkstoff des Metallbandes (12) als auch mit dem Werkstoff des Kontaktträgerbandes (14) eingeht.

2. Verfahren nach Anspruch 1, dadurch gekennzeichnet, daß die während der Widerstandserwärmung gebildete Legierung so gewählt wird, daß sie einen Schmelzpunkt im Bereich des Eutektikums der Silber-Kupfer-Legierung aufweist.

3. Verfahren nach Anspruch 1 oder 2, dadurch gekennzeichnet, daß der zwischen den Vorsprüngen (9) und dem Kontaktträger (14) liegende Bereich vollständig von der durch Widerstandserwärmung gebildeten Legierung ausgefüllt wird.

4. Verfahren nach einem der Ansprüche 2 oder 3, dadurch gekennzeichnet, daß die Stromstärke für die Widerstandserwärmung so gewählt wird, daß eine Silberlegierung mit einem Kupfergehalt von ca. 28 Gew-% entsteht, wobei der Silberanteil aus der Beschichtung (11) des Metallbandes (12) und der Kupferanteil aus dem Kontaktträgerband (14) stammen.

## Claims

1. A method for the production of a semifinished product for electrical contacts, in which a metal strip (12), provided with contact profile is applied as starting material with its strip surface side onto a contact carrier strip (14) so that projections (9) situated on this strip surface side lie on the contact carrier strip (14) and then by means of a melting process an electrical and mechanically firm connection is brought about through resistance heating between the metal strip (12) and the contact carrier strip (14), in which in a first process step the projections (9) of the metal strip (12) are provided with a coating (11) of a material consisting substantially of silver, and in a second process step the metal strip (12) is applied onto the contact carrier strip (14), the coating (11) is melted by means of resistance heating, whilst retaining the projections (9), and the coating (11) runs under a pressure exerted between the metal strip and contact carrier strip by the projections (9) into the grooves or furrows (8) adjacent to the projections and forms an alloy there with the material of the contact carrier strip (14) penetrating into these grooves or furrows (8), characterised in that the metal strip consists substantially of nickel and the contact carrier strip (14) consists substantially of copper, and in that during the resistance heating the contact pressure and/or the current density are controlled or set such that the material of the contact carrier strip (14) can penetrate into the grooves or furrows (8), and hence the projections (9) of the metal strip (12) penetrate at least partially into the contact carrier by melting of the contact carrier strip and thereby such a quantity of the contact carrier material penetrates in the grooves or furrows (8) so that this quantity is at a predetermined ratio to the quantity of the coating material which has likewise run off in these grooves or furrows (8), in which the ratio of contact carrier material to coating material is selected such that the alloy forming between the grooves or furrows (8) has a melting point below the melting points of the materials of the contact carrier strip (14) and of the metal strip (12) and enters into an electrically conducting and mechanically firm connection both with the material of the metal strip (12) and also with the material of the contact carrier strip (14).

2. A method according to Claim 1, characterised in that the alloy formed during the resistance heating is selected so that it has a melting point in the range of the eutectic of the silver/copper alloy.

3. A method according to Claim 1 or 2, characterised in that the region lying between the projections (9) and the contact carrier (14) is completely filled by the alloy formed by resistance heating.

4. A method according to one of Claims 2 or 3, characterised in that the current intensity for the resistance heating is selected so that a silver alloy with a copper content of approximately 28 % by weight is produced, in which the silver component derives from the coating (11) of the metal strip (12) and the copper component derives from the contact carrier strip (14).

## Revendications

1. Procédé de fabrication d'un demi-produit pour contacts électriques, selon lequel on applique une bande métallique (12), pourvue d'un profil de contact, en tant que matière brute par son côté face de bande sur une bande porte-contact (14), de manière que des saillies (9) portées par ce côté face de bande reposent sur la bande porte-contact (14), et on établit ensuite, au moyen d'un processus de fusion sous l'action d'un chauffage par effet Joule, une liaison électrique et mécaniquement solide entre la bande métallique (12) et la bande porte-contact (14), et selon lequel, dans une première étape du procédé, on dote les saillies (9) de la bande métallique (12) d'un revêtement (11) d'un matériau formé essentiellement d'argent et, dans une seconde étape du procédé, on applique la bande métallique (12) sur la bande porte-contact (14), on fait fondre le revêtement (11) au moyen d'un chauffage par effet Joule, avec conservation des saillies (9) et écoulement du revêtement (11), par suite d'une pression exercée entre la bande métallique et la bande porte-contact, à partir des saillies (9) dans les rainures ou sillons (8) voisins des saillies, où il forme un alliage avec le matériau de la bande porte-contact (14) pénétrant dans ces nervures ou sillons (8), caractérisé en ce que la bande métallique est essentiellement de nickel et la bande porte-contact (14) est essentiellement de cuivre, et en ce que, pendant le chauffage par effet Joule, la pression exercée et/ou la densité de courant sont contrôlées ou ajustées de manière que le matériau de la bande porte-contact (14) puisse pénétrer dans les rainures ou sillons (8), de sorte que les saillies (9) de la bande métallique (12), par suite de la fusion de la bande porte-contact, pénètrent au moins partiellement dans le porte-contact et que, de ce fait, la quantité de matériau du porte-contact pénétrant dans les rainures ou les sillons (8) présente un rapport préfixé à la quantité de matériau de revêtement qui s'est également écoulée dans ces rainures ou sillons (8), le rapport du matériau du porte-contact au matériau de revêtement étant choisi de manière que l'alliage qui se forme entre les rainures ou sillons (8) possède un point de fusion plus bas que les points de fusion des matériaux de la bande porte-contact (14) et de la bande métallique (12) et établisse une liaison électriquement conductrice et mécaniquement solide à la fois avec le matériau de la bande métallique (12) et avec le matériau de la bande porte-contact (14).

2. Procédé selon la revendication 1, caractérisé en ce que l'on choisit l'alliage, formé pendant le chauffage par effet Joule, de manière qu'il présente un point de fusion dans le domaine du système eutectique d'un alliage argent-cuivre.

3. Procédé selon la revendication 1 ou 2, caractérisé en ce que la zone située entre les saillies (9) et le porte-contact (14) est complètement remplie par l'alliage formé sous l'action du chauffage par effet Joule.

4. Procédé selon la revendication 2 ou 3, caractérisé en ce que l'on choisit l'intensité du courant électrique pour le chauffage par effet Joule de manière qu'il se forme un alliage d'argent ayant une teneur en cuivre d'environ 28 % en poids, la proportion d'argent de l'alliage provenant du revêtement (11) de la bande métallique (12) et la proportion de cuivre provenant de la bande porte-contact (14).
